# FASCICULE DE BREVET EUROPEEN

(11) **EP 4 415 924 B1**
(45) Date de publication et mention de la délivrance du brevet: **29.10.2025**
(21) Numéro de dépôt: 22789261.9
(22) Date de dépôt: 08.09.2022
(51) Int. Cl.: B23P 15/00, B23K 11/11, F16B 5/08, F16B 11/00, B21J 15/02, B23K 26/32, B23K 101/00, B23K 101/18, B23K 26/00, C09J 5/10, B23K 26/22

(54) **PROCÉDE D'ASSEMBLAGE PAR COLLAGE ET SOUDAGE DE DEUX PIÈCES EN TÔLE**
VERFAHREN ZUM VERBINDEN ZWEIER BLECHTEILE DURCH VERKLEBEN UND VERSCHWEISSEN
METHOD FOR JOINING TWO SHEET-METAL PARTS TOGETHER BY ADHESIVE BONDING AND WELDING

(30) Priorité: 14.10.2021 FR 2110902
(43) Date de publication de la demande: 21.08.2024
(73) Titulaire: Stellantis Auto SAS, 78300 Poissy (FR)
(72) Inventeur: MAGNAUD, Florian, 92500 RUEIL MALMAISON (FR); JACOTOT, Eric, 90000 BELFORT (FR); MARQUES, Gabriel, 91220 BRETIGNY SUR ORGE (FR)
(74) Mandataire: BCIP
(86) Numéro de dépôt international: PCT/FR2022/051697
(87) Numéro de publication internationale: WO 2023/062296

(56) Documents cités:
- DE-A1- 102014 225 458
- FR-A1- 3 025 847
- FR-A1- 3 041 556
- US-A1- 2016 158 873
- US-A1- 2018 147 652

## Description

### [Domaine technique]

La présente invention se rapporte d'une manière générale au domaine de l'assemblage de deux pièces en tôle métallique, telles que des pièces de carrosserie pour véhicule.

Elle vise plus particulièrement une structure d'assemblage de pièces en tôle métallique dans laquelle ces deux feuilles sont jointes par combinaison d'un joint de colle et de points de soudure électrique.

### [Technique antérieure]

Il est courant dans l'industrie automobile de réaliser des assemblages de deux pièces en tôle métallique par deux de leurs bords superposés selon une ligne de jointure.

De telles pièces en tôle quand elles servent de pièces de carrosserie doivent en outre répondre à des exigences de tenue mécanique et de rigidité.

Aussi, afin de gagner en rigidité, l'emploi de techniques de collage à l'aide de colle structurale à base d'époxy ou de polyuréthane élastomère s'est considérablement développé ces dernières années, notamment dans l'industrie automobile.

Une des particularités principales de l'utilisation de tels procédés de collage est que la fixation définitive des pièces n'est obtenue qu'après la polymérisation (durcissement) de la colle.

Dans le cadre de l'industrie automobile, les phases d'encollage et d'assemblage des pièces de tôle interviennent lors des étapes de ferrage pendant lesquelles on réalise la caisse dite ferrée.

La polymérisation de la colle n'intervenant que bien plus tardivement après l'étape de cataphorèse au niveau de l'atelier de peinture, il est donc nécessaire de pouvoir maintenir les pièces encollées immobiles l'une par rapport à l'autre tant que la polymérisation de la colle n'est pas intervenue.

Afin de pouvoir garantir ce maintien jusqu'à cette polymérisation, les constructeurs automobiles sont donc contraints de fixer également les deux pièces de tôle par des points de soudure.

Il est donc connu, en particulier du document FR 3 025 847 A1, d'assembler selon une ligne de jointure deux pièces en tôle métallique par deux de leurs bords, suivant un procédé d'assemblage par collage et soudage comportant successivement les étapes suivantes :
- dépose de manière discontinue selon ladite ligne de jointure de plusieurs cordons de colle sur un bord de la première pièce,
- superposition d'un bord de la seconde pièce sur ledit bord de la première pièce et pressage de ces deux bords l'un contre l'autre,
- réalisation de points de soudure sur lesdits bords superposés desdites pièces au niveau des tronçons de ladite ligne de jointure dépourvus de colle.

Après la réalisation de ces points de soudure et le retrait des moyens de serrage, il arrive régulièrement que le phénomène de retour élastique de la tôle provoque un léger bombage vers l'extérieur du bord de l'une des pièces entre deux points de soudure (ce phénomène étant désigné couramment sous le terme « festonnage »).

L'augmentation locale de l'écartement entre les deux bords des pièces induite par ce « festonnage » peut entraîner le déchirement localisé du cordon de colle s'étendant entre ces deux points de soudure et l'apparition de bulles d'air, de sorte à détériorer localement la qualité de la fixation par collage entre les deux pièces.

### [Exposé de l'invention]

La présente invention vise donc à améliorer la situation.

Elle propose à cet effet un procédé d'assemblage par collage et soudage selon une ligne de jointure de deux pièces en tôle métallique comprenant les étapes successives suivantes :
- dépose de manière discontinue selon ladite ligne de jointure de plusieurs cordons de colle sur un bord de la première pièce,
- superposition d'un bord de la seconde pièce sur ledit bord de la première pièce et pressage de ces deux bords l'un contre l'autre,
- réalisation de points de soudure sur lesdits bords superposés desdites pièces au niveau des tronçons de ladite ligne de jointure dépourvus de colle ; caractérisé en ce qu'il comporte, avant ladite étape de dépose desdits cordons de colle, une étape d'enfoncement partiel d'au moins un rivet auto-poinçonneur dans ledit bord de la première pièce au niveau de ladite ligne de jointure, l'étape de dépose desdits cordons de colle étant en outre réalisée de sorte que chaque dit rivet auto-poinçonneur soit recouvert par un cordon de colle correspondant.

Le désaffleurement de chaque dit rivet vis-à-vis du bord de la première pièce permet, lors de la réalisation des deux points de soudage situés de part et d'autre de chaque cordon de colle recouvrant initialement un tel rivet, de contraindre la tôle du bord de la seconde pièce et d'entraîner un léger étirement de cette tôle.

Ainsi, après le retrait des moyens de serrage, le retour élastique de cette tôle du bord de la seconde pièce entre ces deux points de soudage est empêché par le rivet qui la maintient sous contrainte de sorte à éviter, ou tout du moins à limiter considérablement, l'apparition du phénomène de « festonnage » et à garantir une qualité de collage optimale.

Selon des caractéristiques préférées dudit procédé d'assemblage selon l'invention :
- l'enfoncement partiel de chaque dit rivet auto-poinçonneur est paramétré de sorte que son désaffleurement avec ledit bord de la première pièce soit compris entre 1 et 2 millimètres ;
- l'enfoncement partiel de chaque dit rivet auto-poinçonneur est réalisé de sorte que ce dernier ne traverse pas entièrement ledit bord de la première pièce ;
- la dépose desdits cordons de colle est réalisée de sorte que chaque dit rivet auto-poinçonneur soit agencé dans la zone centrale du cordon de colle le recouvrant ;
- le pressage l'un contre l'autre desdits bords superposés s'effectue en plusieurs points répartis le long de ladite ligne de jointure au niveau de chaque dit cordon de colle ;
- au niveau de chaque cordon de colle recouvrant un rivet auto-poinçonneur, ledit pressage est exercé au droit dudit rivet auto-poinçonneur ;
- les cordons de colle sont déposés par un dispositif à débit de colle variable et de sorte que ce débit soit plus faible lors de la dépose des deux portions d'extrémité de chaque cordon que durant la dépose de sa portion principale centrale ;
- la colle utilisée est une colle de type structurale à base d'époxy ou bien à base de polyuréthane élastomère ; et/ou
- lesdits points de soudure sont réalisés par soudage par résistance électrique.

L'invention vise également sous un second aspect un sous-ensemble structurel de deux pièces en tôle métallique obtenu par un tel procédé d'assemblage.

### [Brève description des dessins]

L'exposé de l'invention sera maintenant poursuivi par la description détaillée de plusieurs exemples de réalisation, donnée ci-après à titre illustratif mais non limitatif, en référence aux dessins annexés, sur lesquels :
[Fig 1] est une vue partielle de côté d'un sous-ensemble structurel comportant deux pièces en tôle métallique assemblées l'une à l'autre par deux de leurs bords superposés suivant le procédé d'assemblage par collage et soudage selon l'invention ;
[Fig 2] représente vue en coupe du sous-ensemble structurel de la figure 1, prise selon le plan Il s'étendant perpendiculairement au plan de leurs deux bords superposés au niveau de la ligne de jointure ;
[Fig 3] est une illustration de la première étape du procédé d'assemblage selon l'invention de deux pièces en tôle métallique par deux de leurs bords ;
[Fig 4] représente une illustration de la deuxième étape du procédé d'assemblage selon l'invention de deux pièces en tôle métallique par deux de leurs bords ;
[Fig 5] est une illustration de la troisième étape du procédé d'assemblage selon l'invention de deux pièces en tôle métallique par deux de leurs bords. une illustration de la première étape du procédé d'assemblage selon l'invention de deux pièces en tôle métallique par deux de leurs bords ; et
[Fig 6] représente une illustration de la quatrième étape du procédé d'assemblage selon l'invention de deux pièces en tôle métallique par deux de leurs bords.

### [Description détaillée]

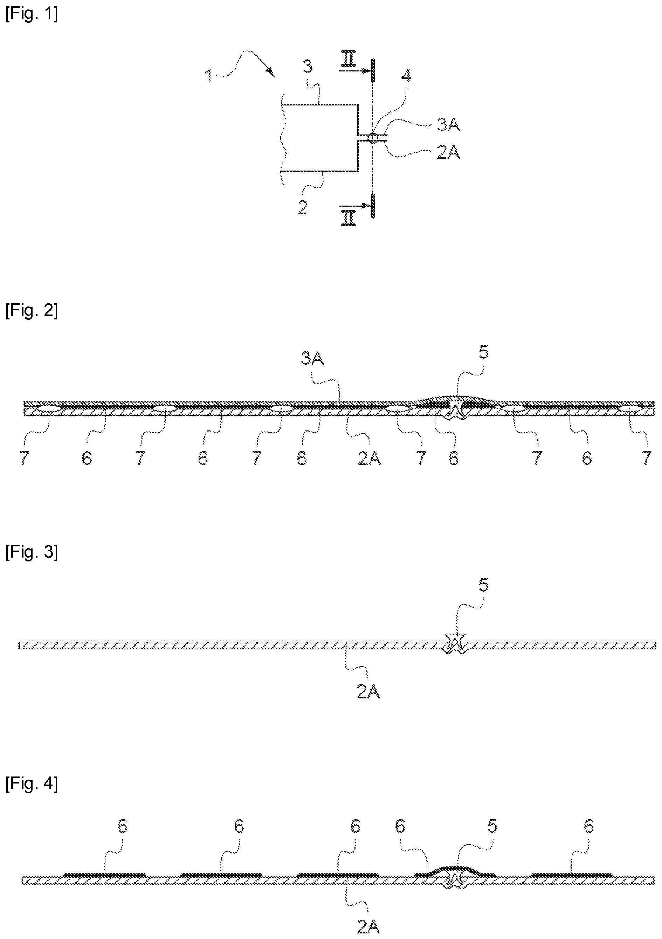

La figure 1 représente une vue partielle de côté d'un sous-ensemble structurel 1 comportant deux pièces en tôle métallique 2, 3 comprennent chacune un bord respectif 2A, 3A.

Ces deux bords 2A, 3A sont superposés et assemblés l'un à l'autre le long d'une ligne de jointure 4 par le procédé d'assemblage selon l'invention.

Tel qu'illustré sur la figure 2, le bord 2A de la première pièce 2 comprend au moins un rivet auto-poinçonneur 5 enfoncé partiellement dans la tôle sans la traverser au niveau de la ligne de jointure 4.

Saillant au-dessus de la face interne de ce bord 2A, la tête de chaque dit au moins un rivet auto-poinçonneur 5 repose en appui contre la face interne en regard du bord 3A de la seconde pièce 3.

Les deux bords superposés 2A, 3A des pièces 2, 3 sont assemblés par une pluralité de cordons de colle discontinus 6 alignés le long de la ligne de jointure 4, ainsi que par une pluralité de points de soudure 7 répartis le long de cette ligne de jointure 4 et agencés chacun entre deux cordons de colle 6. Chaque dit au moins un rivet auto-poinçonneur 5 traverse un cordon de colle correspondant 6.

On va maintenant décrire en détails et à l'appui des figures 3 à 6, le procédé d'assemblage des deux pièces de tôle métallique 2, 3 formant le sous-ensemble structurel 1.

La première étape du procédé de l'invention va être décrite en référence à la figure 3.

Durant cette première étape, au moins un rivet auto-poinçonneur 5 est enfoncé partiellement (à l'aide d'un outil d'enfoncement adéquat non représenté) dans le bord en tôle 2A de la première pièce 2, au niveau de la ligne de jointure 4.

Afin de préserver l'étanchéité, l'enfoncement de chaque rivet auto-poinçonneur 5 est en entre réalisé de sorte que ce dernier ne traverse pas entièrement le bord 2A de la première pièce 2.

La deuxième étape du procédé de l'invention va être décrite en référence à la figure 4.

Durant cette deuxième étape, plusieurs cordons de colle 6 sont déposés de manière discontinue sur le bord 2A de cette première pièce 2, selon la ligne de jointure 4, et de sorte que chaque au moins dit rivet auto-poinçonneur 5 soit recouvert par un cordon de colle correspondant 6.

En l'occurrence la colle utilisée est préférentiellement une colle de type structurale à base d'époxy ou bien à base de polyuréthane élastomère.

De manière avantageuse, la dépose des cordons de colle 6 est réalisée de sorte que chaque au moins dit rivet auto-poinçonneur 5 soit agencé dans la zone centrale du cordon de colle 6 le recouvrant. Un tel agencement permet ainsi, au terme du procédé d'assemblage, que chaque rivet auto-poinçonneur 5 soit agencé à équidistance entre deux points de soudure électrique.

De préférence, on déposera des cordons de colle 6 d'une longueur de 100 à 150 millimètres et espacés les uns des autres d'une distance de 15 à 20 millimètres de sorte à garantir que les points de soudure ne seront pas réalisés ultérieurement sur une zone encollée.

Les cordons de colle 6 peuvent être déposés par un dispositif produisant un débit de colle fixe ou variable.

Dans le cas de l'utilisation d'un dispositif de dépose à débit variable, le débit de colle sera avantageusement plus faible lors de la dépose des deux portions d'extrémité de chaque cordon 6 que durant la dépose de sa portion principale centrale.

Cette plus faible quantité de colle au niveau des portions d'extrémité des cordons 6 permettra de limiter la dispersion par étalement de la colle à ces extrémités lors de réalisation des points de soudure, de sorte à éviter que de la colle ne vienne se retrouver dans les zone de soudage.

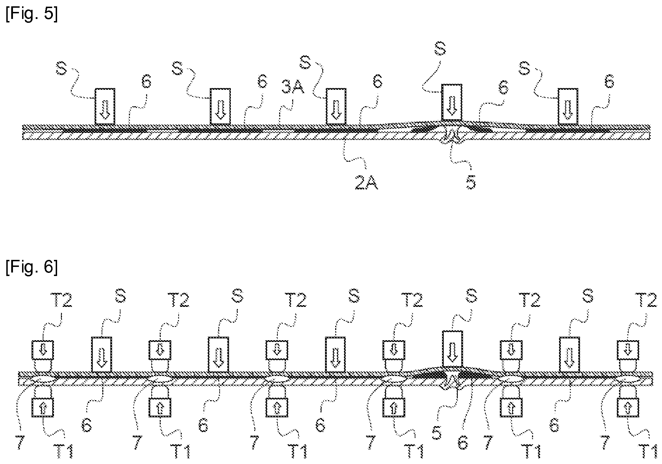

La troisième étape du procédé de l'invention va être décrite en référence à la figure 5.

Au cours de cette troisième étape, le bord en tôle 3A de la seconde pièce 3 est superposé sur le bord 2A de la première pièce 2 et ces deux bords 2A, 2B sont pressés l'un contre l'autre par des moyens de serrage S.

Le pressage l'un contre l'autre des bords 2A, 3A s'effectue avantageusement en plusieurs points répartis le long de la ligne de jointure 4 au niveau de chaque cordon de colle 6.

Ce pressage a pour effet de provoquer l'écrasement des cordons de colle 6 et la dispersion de la colle située au-dessus de chaque rivet auto-poinçonneur 5 dans la zone périphérique entourant ce rivet 5 de sorte que sa tête vienne au contact du bord 3A de la seconde pièce 3.

Au niveau de chaque cordon de colle 6 recouvrant un rivet auto-poinçonneur 5 et afin d'éviter tout pliage de la tôle de l'un des deux bords 2A, 3A à proximité de ce ou de ces rivets 5, le pressage est exercé de préférence au droit du rivet auto-poinçonneur 5.

Tel qu'illustré sur la figure 5, chaque rivet auto-poinçonneur 5 traverse désormais le cordon de colle 6 correspondant et l'écartement entre les deux bords 2A et 3A des pièces 2, 3 au niveau de ce ou ces rivets 5 correspond au désaffleurement de ces derniers avec le bord 2A de la première pièce 2.

La quatrième étape du procédé de l'invention va être maintenant décrite en référence à la figure 6.

Durant cette quatrième étape, des points de soudure 7 sont réalisés à intervalle régulier, par soudage par résistance électrique (FSE), sur les bords superposés 2A, 3A des pièces 2, 3, au niveau des tronçons de la ligne de jointure 4 dépourvus de colle (c'est-à-dire ceux s'étendant entre deux cordons de colle 6 et/ou situés aux extrémités de cette ligne de jointure 4).

En variante, ces points de soudure 7 peuvent être réalisés par un autre procédé de soudage par point, et par exemple par soudage laser.

Ces opérations de soudage, réalisées successivement les unes après les autres tout en maintenant le pressage des deux bords superposés 2A, 3A des pièces 2, 3, sont effectuées classiquement en disposant tout d'abord l'électrode d'une première tête de soudage T1 contre la face externe du bord 2A de la première pièce 2 au niveau de la zone de soudage souhaitée, puis en positionnant l'électrode d'une seconde tête de soudage T2 contre la face externe du bord 3A de la seconde pièce à l'aplomb de la première tête T1, et enfin en faisant passer un courant électrique de très forte intensité entre ces deux électrodes T1, T2 au travers de cette zone de soudage tout en la comprimant de sorte à générer la fusion du métal et à créer un point de soudure.

Une fois l'ensemble des points de soudage réalisés, les moyens de serrage S sont retirés car le pressage des bords 2A, 3A des pièces 2, 3 n'est plus nécessaire.

Lors de la réalisation successive du second des deux points de soudage 7 situés de part et d'autre de chaque cordon de colle 6 traversé par un rivet auto-poinçonneur 5, on remarquera que les têtes de soudage T1, T2 en comprimant l'un contre l'autre les deux bords 2A, 3A des pièces 2, 3 génèrent, du fait de la présence de ce rivet 5, une contrainte de traction sur la tôle du bord 3A de la seconde pièce 3 entrainant un léger étirement de cette tôle.

Après le retrait des moyens de serrage S, le retour élastique de cette tôle du bord 3A entre ces deux points de soudage 7 est empêché par le rivet 5 qui la maintient sous contrainte de sorte à éviter, ou tout du moins à limiter considérablement, l'apparition du phénomène de « festonnage » et à garantir une qualité de collage optimale.

Afin d'obtenir une efficacité satisfaisante sans que l'augmentation locale de l'épaisseur de la ligne de jointure 4 soit trop sensible, l'enfoncement partiel de chaque rivet auto-poinçonneur 5 est paramétré de sorte que son désaffleurement avec le bord 2A de la première pièce 2 soit avantageusement compris entre 1 et 2 millimètres.

Selon des variantes de réalisation non représentées et en fonction de la géométrie des bords des pièces à assembler et/ou de la longueur de la ligne de jointure, le nombre de rivets auto-poinçonneur 5 peut varier.

En pratique, on disposera ces derniers dans les zones de la ligne de jointure 4 les plus susceptibles de « festonner ».

On peut également envisager d'en disposer un au niveau de chaque cordon de colle 6 entre deux zones de soudure, ces rivets auto-poinçonneurs 6 étant alors de préférence espacés les uns des autres suivant un intervalle régulier.

On rappelle enfin que la présente invention ne se limite pas aux formes de réalisation décrites et représentées, mais englobe également toutes les variantes d'exécution à la portée de l'homme du métier dans le cadre des revendications.

## Revendications

1. Procédé d'assemblage par collage et soudage selon une ligne de jointure (4) de deux pièces en tôle métallique (2, 3) comprenant les étapes successives suivantes :
- dépose de manière discontinue selon ladite ligne de jointure (4) de plusieurs cordons de colle (6) sur un bord (2A) de la première pièce (2),
- superposition d'un bord (3A) de la seconde pièce (3) sur ledit bord (2A) de la première pièce (2) et pressage de ces deux bords (2A, 3A) l'un contre l'autre,
- réalisation de points de soudure (7) sur lesdits bords superposés (2A, 3A) desdites pièces (2, 3) au niveau des tronçons de ladite ligne de jointure (4) dépourvus de colle ;
**caractérisé en ce qu'**il comporte, avant ladite étape de dépose desdits cordons de colle (6), une étape d'enfoncement partiel d'au moins un rivet auto-poinçonneur (5) dans ledit bord (2A) de la première pièce (2) au niveau de ladite ligne de jointure (4),
l'étape de dépose desdits cordons de colle (6) étant en outre réalisée de sorte que chaque dit rivet auto-poinçonneur (5) soit recouvert par un cordon de colle correspondant (6).

2. Procédé d'assemblage selon la revendication 1, **caractérisé en ce que** l'enfoncement partiel de chaque dit rivet auto-poinçonneur (5) est paramétré de sorte que son désaffleurement avec ledit bord (2A) de la première pièce (2) soit compris entre 1 et 2 millimètres.

3. Procédé d'assemblage selon l'une des revendications 1 ou 2, **caractérisé en ce que** l'enfoncement partiel de chaque dit rivet auto-poinçonneur (5) est réalisé de sorte que ce dernier ne traverse pas entièrement ledit bord (2A) de la première pièce (2).

4. Procédé d'assemblage selon l'une des revendications 1 à 3, **caractérisé en ce que** la dépose desdits cordons de colle (6) est réalisée de sorte que chaque dit rivet auto-poinçonneur (5) soit agencé dans la zone centrale du cordon de colle (6) le recouvrant.

5. Procédé d'assemblage selon l'une des revendications 1 à 4, **caractérisé en ce que** le pressage l'un contre l'autre desdits bords superposés (2A, 3A) s'effectue en plusieurs points répartis le long de ladite ligne de jointure (4) au niveau de chaque dit cordon de colle (4).

6. Procédé d'assemblage selon la revendication 5, **caractérisé en ce qu'**au niveau de chaque cordon de colle (6) recouvrant un rivet auto-poinçonneur (5), ledit pressage est exercé au droit dudit rivet auto-poinçonneur (5).

7. Procédé d'assemblage selon l'une des revendications 1 à 6, **caractérisé en ce que** les cordons de colle (6) sont déposés par un dispositif à débit de colle variable et de sorte que ce débit soit plus faible lors de la dépose des deux portions d'extrémité de chaque cordon (6) que durant la dépose de sa portion principale centrale.

8. Procédé d'assemblage selon l'une des revendications 1 à 7, **caractérisé en ce que** la colle utilisée est une colle de type structurale à base d'époxy ou bien à base de polyuréthane élastomère.

9. Procédé d'assemblage selon l'une des revendications 1 à 8, caractérisé en ce lesdits points de soudure (7) sont réalisés par soudage par résistance électrique.

10. Sous-ensemble structurel (1) de deux pièces en tôle métallique (2, 3) obtenu par un procédé d'assemblage selon l'une des revendications 1 à 9.

## Patentansprüche

1. Verfahren zum Verbinden zweier Metallblechteile (2, 3) durch Kleben und Schweißen entlang einer Verbindungslinie (4), das die folgenden aufeinander folgenden Schritte umfasst:
- diskontinuierlich mehrere Kleberschnüre (6) entlang der Verbindungslinie (4) auf einen Rand (2A) des ersten Teils (2) aufbringt,
- eine Kante (3A) des zweiten Teils (3) über die Kante (2A) des ersten Teils (2) gelegt wird und diese beiden Kanten (2A, 3A) gegeneinander gedrückt werden,
- Herstellung von Schweißpunkten (7) an den übereinander liegenden Kanten (2A, 3A) der Teile (2, 3) an den kleberfreien Abschnitten der Verbindungslinie (4);
Es ist **dadurch gekennzeichnet, dass** es vor dem Schritt des Ablegens der Klebstoffschnüre (6) einen Schritt des teilweisen Eindrückens mindestens eines selbststanzenden Niets (5) in den Rand (2A) des ersten Teils (2) im Bereich der Verbindungslinie (4) umfasst,
Der Schritt des Ablegens der Kleberschnüre (6) ist ferner so ausgeführt, dass jede selbststanzende Niete (5) mit einer entsprechenden Kleberschnur (6) abgedeckt ist.

2. Montageverfahren nach Anspruch 1, **dadurch gekennzeichnet, dass** das teilweise Eindrücken jedes selbststanzenden Niets (5) so eingestellt ist, dass seine Entbündelung mit der Kante (2A) des ersten Teils (2) zwischen 1 und 2 mm liegt.

3. Montageverfahren nach einem der Ansprüche 1 oder 2, **dadurch gekennzeichnet, dass** das teilweise Eindrücken jedes selbststanzenden Niets (5) so ausgeführt wird, dass dieses letztere den Rand (2A) des ersten Teils (2) nicht vollständig durchquert.

4. Montageverfahren nach einem der Ansprüche 1 bis 3, **dadurch gekennzeichnet, dass** das Aufbringen der Kleberstränge (6) so ausgeführt wird, dass jeder selbststanzende Niet (5) in dem zentralen Bereich des Kleberstranges (6) angeordnet ist, der ihn bedeckt.

5. Montageverfahren nach einem der Ansprüche 1 bis 4, **dadurch gekennzeichnet, dass** das Aneinanderpressen der übereinander liegenden Ränder (2A, 3A) an mehreren Punkten erfolgt, die entlang der Verbindungslinie (4) an jeder Kleberschnur (4) verteilt sind.

6. Montageverfahren nach Patentanspruch 5, **dadurch gekennzeichnet, dass** im Bereich jeder Kleberschnur (6), die einen selbststanzenden Niet (5) bedeckt, das genannte Pressen im Bereich des genannten selbststanzenden Niets (5) ausgeübt wird.

7. Montageverfahren nach einem der Ansprüche 1 bis 6, **dadurch gekennzeichnet, dass** die Kleberstränge (6) durch eine Vorrichtung mit variabler Klebermenge aufgebracht werden, und zwar in der Weise, dass diese Menge bei der Ablage der beiden Endabschnitte jeder Schnur (6) geringer ist als bei der Ablage ihres zentralen Hauptabschnitts.

8. Montageverfahren nach einem der Ansprüche 1 bis 7, **dadurch gekennzeichnet, dass** der verwendete Klebstoff ein Klebstoff vom strukturellen Typ auf Epoxidbasis oder auf Basis von elastomerem Polyurethan ist.

9. Montageverfahren nach einem der Ansprüche 1 bis 8, **dadurch gekennzeichnet, dass** die Schweißpunkte (7) durch Widerstandsschweißen hergestellt werden.

10. Bauuntergruppe (1) von zwei Metallblechteilen (2, 3), die durch ein Fügeverfahren nach einem der Ansprüche 1 bis 9 erhalten wurde.

## Claims

1. Process for assembling two metal sheet components (2, 3) by glueing and welding according to a joining line (4), comprising the following successive steps:
discontinuously depositing, according to said joining line (4), a plurality of adhesive beads (6) on an edge (2A) of the first component (2),
- superimposing an edge (3A) of the second component (3) on said edge (2A) of the first component (2) and pressing these two edges (2A, 3A) against each other,
making spot welds (7) on said superposed edges (2A, 3A) of said components (2, 3) on the level of the portions of said joining line (4) devoid of glue;
wherein it comprises, before said step of depositing said adhesive beads (6), a step of partially driving in at least one self-punching rivet (5) into said rim (2A) of the first component (2) on the level of said joining line (4),
the step of depositing said adhesive beads (6) being furthermore realised so that each said self-punching rivet (5) is covered by a corresponding adhesive bead (6).

2. Method of assembly according to claim 1, wherein the partial depression of each said self-punching rivet (5) is parameterized so that its misalignment with said edge (2A) of the first component (2) is between 1 and 2 millimetres.

3. Method of assembly according to either of Claims 1 and 2, **characterised in that** the partial depression of each said self-punching rivet (5) is realised such that the latter does not pass entirely through the said rim (2A) of the first component (2).

4. Method of assembly according to one of Claims 1 to 3, **characterised in that** the removal of the said adhesive beads (6) is realised so that each said self-punching rivet (5) is arranged in the central zone of the adhesive bead (6) covering it.

5. Method of assembly according to one of Claims 1 to 4, **characterised in that** the pressing against one another of the said superposed edges (2A, 3A) takes place at several points distributed along the said joining line (4) on the level of each said bead of adhesive (4).

6. Method of assembly according to Claim 5, **characterised in that**, at the level of each bead of adhesive (6) covering a self-punching rivet (5), the said pressing is exerted in line with the said self-punching rivet (5).

7. Method of assembly according to one of Claims 1 to 6, **characterised in that** the adhesive beads (6) are deposited by a device with a variable adhesive flow rate and in such a way that this flow rate is lower during the removal of the two end portions of each bead (6) than during the removal of its central main portion.

8. Assembly process according to one of Claims 1 to 7, **characterised in that** the adhesive used is an adhesive of the structural type based on epoxy or else based on polyurethane elastomer.

9. Assembly process according to one of Claims 1 to 8, **characterised in that** the said welding points (7) are realised by electrical resistance welding.

10. Structural subassembly (1) of two metal sheet components (2, 3) obtained by an assembly process according to one of Claims 1 to 9.
